# EUROPEAN PATENT APPLICATION

(11) **EP 3 927 020 A1**
(43) Date of publication of application: **22.12.2021**
(21) Application number: 19915039.2
(22) Date of filing: 13.02.2019
(51) Int. Cl.: H04W 40/04

(54) **METHOD FOR CELL HANDOVER, AND DEVICES**

(71) Applicant: GUANGDONG OPPO MOBILE TELECOMMUNICATIONS CORP., LTD., Wusha, Chang'an Dongguan Guangdong 523860 (CN)
(72) Inventor: LU, Qianxi, Dongguan, Guangdong 523860 (CN); YOU, Xin, Dongguan, Guangdong 523860 (CN)
(74) Representative: Ipside
(86) International application number: PCT/CN2019/074986
(87) International publication number: WO 2020/164018

(57) **Abstract**

The present application discloses a method for cell handover, and devices, which can provide a terminal device with a success rate of cell handover based on a conditional trigger. The method includes: selecting, according to at least one piece of attribute information of each candidate target cell of at least one candidate target cell, a first target cell from the at least one candidate target cell, where the at least one piece of attribute information includes at least one of the following categories: priority information, weight information, signal quality, an available resource, and admission capability; and initiating random access to the first target cell to perform cell handover.

## Description

### TECHNICAL FIELD

Embodiments of the present application relate to the field of communications and, in particular, to a method for cell handover, and devices.

### BACKGROUND

At present, various communication systems support cell handover by a terminal device. For example, when a user who is using a network service moves from one cell to another cell, or due to adjustment of traffic load in wireless transmission, activation operation and maintenance, device fault or other reasons, the system requires a handover (transfer) of the user's communication link with the original cell to a new cell in order to ensure continuity of communication and quality of service, that is, to perform a handover procedure.

For a traditional handover procedure, the handover is based on a handover command of a network device. For example, a network device may select, according to a measurement report transmitted by a terminal device, one of cells as a target cell for handover, and transmits the handover command to the terminal device. After receiving the handover command, the terminal device executes a handover procedure of switching to the target cell. However, for a high-speed mobile scenario, when moving to an area of poor coverage, the terminal device may not receive the handover command transmitted by the network device, resulting in that the terminal device cannot complete the handover procedure.

### SUMMARY

Embodiments of the present application disclose a method for cell handover, and devices, which can provide a terminal device with a success rate of cell handover based on a conditional trigger.

In a first aspect, provided is a method for cell handover, including: selecting, according to at least one piece of attribute information of each candidate target cell of at least one candidate target cell, a first target cell from the at least one candidate target cell, where the at least one piece of attribute information includes at least one of the following categories: priority information, weight information, signal quality, an available resource, and admission capability; and initiating random access to the first target cell to perform cell handover.

In a second aspect, provided is a method for cell handover, including: initiating random access to a first target cell to perform cell handover; when the random access to the first target cell reaches a maximum number of access times and/or a maximum access duration allowed by the first target cell, initiating random access to a second target cell, where the second target cell is a cell used for handover.

In a third aspect, provided is a method for cell handover, including: initiating random access to a first target cell to perform cell handover; after the random access to the first target cell fails, initiating random access to a second target cell, where the initiating the random access to the first target cell includes transmitting, to the first target cell, a first preamble for random access, and where the initiating the random access to the second target cell includes transmitting, to the second target cell, a second preamble for random access, and power for transmitting the second preamble is determined according to power upon power ramping of power for transmitting the first preamble.

In a fourth aspect, provided is a method for cell handover, including: transmitting at least one piece of attribute information of each candidate target cell of at least one candidate target cell to a terminal device, where the at least one piece of attribute information includes at least one of the following categories: priority information, weight information, signal quality, an available resource, and admission capability, and the at least one piece of attribute information is used by the terminal device to perform cell handover.

In a fifth aspect, provided is a terminal device, where the terminal device can execute the method described above in the first aspect, the second aspect, the third aspect, or any alternative implementation thereof. Specifically, the terminal device may include a functional module for executing the method described above in the first aspect, the second aspect, the third aspect, or any possible implementation thereof.

In a sixth aspect, provided is a network device, where the network device can execute the method described above in the fourth aspect or any possible implementation thereof. Specifically, the network device may include a functional module for executing the method described above in the fourth aspect or any possible implementation thereof.

In a seventh aspect, provided is a terminal device including a processor and a memory. The memory is configured to store a computer program, and the processor is configured to call and run the computer program stored in the memory to execute the method described above in the first aspect, the second aspect, the third aspect, or any possible implementation thereof.

In an eighth aspect, provided is a network device including a processor and a memory. The memory is configured to store a computer program, and the processor is configured to call and run the computer program stored in the memory to execute the method described above in the fourth aspect or any possible implementation thereof.

In a ninth aspect, provided is a chip for implementing the method described above in the first aspect, the second aspect, the third aspect, or any possible implementation thereof. Specifically, the chip includes: a processor, configured to call and run a computer program from a memory to enable a device installed with the chip to execute the method described above in the first aspect, the second aspect, the third aspect, or any possible implementation thereof.

In a tenth aspect, provided is a chip for implementing the method described above in the fourth aspect or any possible implementation thereof. Specifically, the chip includes: a processor, configured to call and run a computer program from a memory to enable a device installed with the chip to execute the method described above in the fourth aspect or any possible implementation thereof.

In an eleventh aspect, provided is a computer readable storage medium configured to store a computer program that enables a computer to execute the method described above in the first aspect, the second aspect, the third aspect, or any possible implementation thereof.

In a twelfth aspect, provided is a computer readable storage medium configured to store a computer program that enables a computer to execute the method described above in the fourth aspect or any possible implementation thereof.

In a thirteenth aspect, provided is a computer program product including a computer program instruction that enables a computer to execute the method described above in the first aspect, the second aspect, the third aspect, or any possible implementation thereof.

In a fourteenth aspect, provided is a computer program product including a computer program instruction that enables a computer to execute the method described above in the fourth aspect or any possible implementation thereof.

In a fifteenth aspect, provided is a computer program which, when running on a computer, enables the computer to execute the method described above in the first aspect, the second aspect, the third aspect, or any possible implementation thereof.

In a sixteenth aspect, provided is a computer program which, when running on a computer, enables the computer to execute the method described above in the fourth aspect or any possible implementation thereof.

In a seventeenth aspect, provided is a communication system including a network device and a terminal device;
the network device is configured to transmit at least one piece of attribute information of each candidate target cell of at least one candidate target cell to a terminal device, where the at least one piece of attribute information includes at least one of the following categories: priority information, weight information, signal quality, an available resource, and admission capability, and the at least one piece of attribute information is used by the terminal device to perform cell handover; and
the terminal device is configured to: select, according to the at least one piece of attribute information of the each candidate target cell of the at least one candidate target cell, a first target cell from the at least one candidate target cell, where the at least one piece of attribute information includes at least one of the following categories: priority information, weight information, signal quality, an available resource, and admission capability; and initiate random access to the first target cell to perform cell handover.

The technical solution provided in the present application offers, a terminal device for which cell handover is performed based on a conditional trigger, a specific operation manner for selecting a target cell and/or performing cell handover, thereby avoiding a phenomenon of low handover success rate due to blind cell handover performed by the terminal device.

### BRIEF DESCRIPTION OF DRAWINGS

FIG. 1 is a schematic diagram illustrating a communication system architecture applicable to an embodiment of the present application.
FIG. 2 is a schematic diagram illustrating a contention-based random access procedure according to an embodiment of the present application.
FIG. 3 is a schematic diagram illustrating a non-contention-based random access process according to an embodiment of the present application.
FIG. 4 is a schematic diagram illustrating cell handover according to an embodiment of the present application.
FIG. 5 is a schematic diagram illustrating a handover procedure based on a conditional trigger according to an embodiment of the present application.
FIG. 6 is a schematic diagram for cell handover according to an embodiment of the present application.
FIG. 7 is a schematic diagram for cell handover according to an embodiment of the present application.
FIG. 8 is a schematic diagram for cell handover according to an embodiment of the present application.
FIG. 9 is a schematic block diagram illustrating a terminal device according to an embodiment of the present application.
FIG. 10 is a schematic block diagram illustrating another terminal device according to an embodiment of the present application.
FIG. 11 is a schematic block diagram illustrating another terminal device according to an embodiment of the present application.
FIG. 12 is a schematic block diagram illustrating a network device according to an embodiment of the present application.
FIG. 13 is a schematic structural diagram illustrating a communication device according to an embodiment of the present application.
FIG. 14 is a schematic structural diagram of a chip according to an embodiment of the present application.
FIG. 15 is a schematic block diagram illustrating a communication system according to an embodiment of the present application.

### DESCRIPTION OF EMBODIMENTS

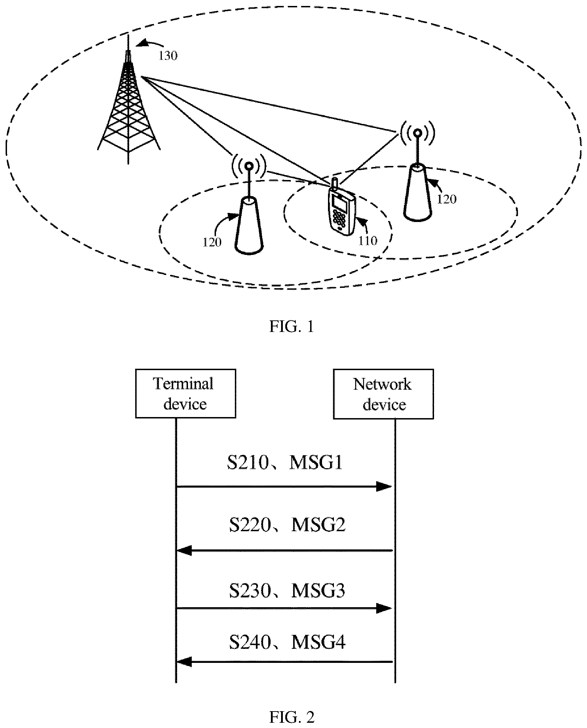

FIG. 1 is a schematic diagram illustrating a system 100 according to an embodiment of the present application.

As shown in FIG. 1, a terminal device 110 is connected to a first network device 130 under a first communication system and a second network device 120 under a second communication system. For example, the first network device 130 is a network device under long term evolution (Long Term Evolution, LTE), and the second network device 120 is a network device under new radio (New Radio, NR).

The first network device 130 and the second network device 120 may include multiple cells.

It should be understood that FIG. 1 is an example of a communication system according to an embodiment of the present application, but the embodiment of the present application is not limited to what shown in FIG. 1.

As an example, the communication system adaptable to the embodiment of the present application may include at least multiple network devices under the first communication system and/or multiple network devices under the second communication system.

For example, the system 100 shown in FIG. 1 may include one primary network device under the first communication system and at least one secondary network device under the second communication system. The at least one secondary network device is respectively connected to the one primary network device to form multi-connection, and is respectively connected to the terminal device 110 to provide services to the terminal device 110. Specifically, the terminal device 110 may establish connections with both the primary network device and the secondary network device.

Optionally, the connection established between the terminal device 110 and the primary network device is a primary connection, while the connection established between the terminal device 110 and the secondary network device is a secondary connection. Control signaling for the terminal device 110 may be transferred through the primary connection, and data for the terminal device 110 may be transferred through both the primary connection and the secondary connection, or may be transferred only through the secondary connection.

As another example, the first communication system and the second communication system in the embodiment of the present application are different, but the first communication system and the second communication system are not limited in terms of their specific types.

For example, the first communication system and the second communication system may be various communication systems, such as a global system of mobile communication (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE time division duplex (Time Division Duplex, TDD), a universal mobile telecommunication system (Universal Mobile Telecommunication System, UMTS), etc.

The primary network device and the secondary network device may be any access network device.

Optionally, in some embodiments, the access network device may be a base station (Base Transceiver Station, BTS) in the global system of mobile communication (Global System of Mobile communication, GSM) or the code division multiple access (Code Division Multiple Access, CDMA), or a base station (NodeB, NB) in the wideband code division multiple access (Wideband Code Division Multiple Access, WCDMA) system, or an evolutional base station (Evolutional Node B, eNB or eNodeB) in the long term evolution (Long Term Evolution, LTE) system.

Optionally, the access network device may also be a base station (gNB) in a next generation radio access network (Next Generation Radio Access Network, NG RAN) or in an NR system, or a wireless controller in a cloud radio access network (Cloud Radio Access Network, CRAN), alternatively, the access network device may be a relay station, an access point, a vehicle-mounted device, a wearable device, or a network device in a future evolutional public land mobile network (Public Land Mobile Network, PLMN), etc.

In the system 100 shown in FIG. 1, an example is taken where the first network device 130 is a primary network device and the second network device 120 is a secondary network device.

The first network device 130 may be an LTE network device, and the second network device 120 may be an NR network device. Alternatively, the first network device 130 may be an NR network device, and the second network device 120 may be an LTE network device. Alternatively, both the first network device 130 and the second network device 120 may be NR network devices. Alternatively, the first network device 130 may be a GSM network device, a CDMA network device or the like, and the second network device 120 may also be a GSM network device, a CDMA network device, or the like. Alternatively, the first network device 130 may be a macrocell (Macrocell), and the second network device 120 may be a microcell (Microcell), a picocell (Picocell), a femtocell (Femtocell), or the like.

Optionally, the terminal device 110 may be any terminal device, including but not limited to:
one connected via a wired line, e.g., connected via a public switched telephone network (Public Switched Telephone Network, PSTN), a digital subscriber line (Digital Subscriber Line, DSL), a digital cable, or a direct cable; and/or another data connection/network; and/or one via a wireless interface, e.g., for a cellular network, a wireless local area network (Wireless Local Area Network, WLAN), a digital TV network such as a DVB-H network, a satellite network, and an AM-FM broadcast transmitter; and/or an apparatus of another terminal device configured to receive/transmit communication signals; and/or an internet of things (Internet of Things, IoT) device. The terminal device configured to perform communications through the wireless interface may be termed as a "wireless communication terminal", a "wireless terminal", or a "mobile terminal". Examples of the mobile terminal include, but are not limited to, a satellite or cellular telephone; a personal communications system (Personal Communications System, PCS) terminal capable of combining a cellular radio telephone with data processing, facsimile, and data communication capability; a PDA that may include a radio telephone, a pager, Internet/intranet access, a web browser, a notepad, a calendar, and/or a global positioning system (Global Positioning System, GPS) receiver; and a conventional laptop and/or handheld receiver or other electronic device including a radio telephone transceiver. The terminal device may refer to an access terminal, a user equipment (User Equipment, UE), a subscriber unit, a subscriber station, a mobile station, a mobile platform, a remote station, a remote terminal, a mobile device, a user terminal, a terminal, a wireless communication device, a user agent or a user apparatus. The access terminal may be a cellular telephone, a cordless telephone, a session initiation protocol (Session Initiation Protocol, SIP) telephone, a wireless local loop (Wireless Local Loop, WLL) station, a personal digital processing (Personal Digital Assistant, PDA), a handheld device with wireless communication capabilities, a computing device or other processing devices connected to a wireless modem, a vehicle-mounted device, a wearable device, a terminal device in a 5G network, or a terminal device in a future evolutional PLMN, etc.

It should be understood that the terms "system" and "network" herein are often used interchangeably herein.

In an embodiment of the present application, the network device provides a service to a cell, and the terminal device communicates with the network device via a transmission resource (such as a frequency domain resource, or a spectrum resource) used by the cell. The cell may be a cell corresponding to the network device (such as a base station). The cell may belong to a macrocell, or a base station corresponding to a small cell (Small cell), where the small cell herein may include: a metro cell (Metro cell), a micro cell (Micro cell), a pico cell (Pico cell), a femto cell (Femto cell), etc. These small cells have characteristics such as small coverage and low transmitting power, which are suitable for providing high-speed data transmission services.

It should be understood that the method in the embodiment of the present application can be used for transmission of various types of services.

Taking eMBB as an example, the eMBB aims at users obtaining multimedia content, services and data, and its demand is growing very rapidly. Taking eMBB as another example, since the eMBB may be deployed in different scenarios, for example, indoors, urban areas, rural areas, etc., differences in its capabilities and needs are relatively large, so detailed analysis may be made in conjunction with specific deployment scenarios. Taking URLLC as another example, typical applications of the URLLC include: industrial automation, electric power automation, telemedical operations (surgeries), and traffic safety assurance, etc. Typical characteristics of the mMTC include: high connection density, small data amount, delay-insensitive services, low costs and long usage life of modules, etc.

In some special scenarios, the terminal device needs to initiate random access to the network device to establish a connection with the network device. There are many events that trigger a terminal device to perform random access, such as in an initial access procedure of the terminal device; in a re-establishment procedure of the terminal device; in case of out-of-synchronization detection over an uplink when the terminal device has uplink data to transmit; in case of no scheduling request (scheduling request, SR) resource when the terminal device has uplink data to transmit; in case of a necessity for the terminal device to perform cell handover; in case of out-of-synchronization detection over an uplink when the base station has downlink data to transmit.

The random access of the terminal device may include contention-based random access and non-contention-based random access.

Reference may be made to FIG. 2 for a contention-based random access procedure.

S210, the terminal device transmits a message 1 (message1, MSG1) to the network device on a random access channel, where the MSG1 includes a random access preamble. The MSG1 may be a physical layer message.

S220, after receiving the MSG1, the network device may transmit a MSG2 on a downlink share channel (downlink share channel, DL-SCH), where the MSG2 may be a random access response (Random Access Response, RAR). The MSG2 may be a MAC layer message.

The RAR response carries timing advance (timeing advance, TA) adjustment of uplink transmission, information about an available uplink resource, and a temporary cell radio network temporary identifier (temporary cell radio network temporary identifier, T-CRNTI), that is, a temporary CRNTI.

Optionally, the RAR response may be generated by a media access control (Media Access Control, MAC) layer of the network device. One MSG2 may simultaneously correspond to responses to random access requests from multiple terminal devices.

In S230, after receiving the MSG2, the terminal device determines whether the MSG2 belongs to its own RAR message, and transmits, when it is determined that the MSG2 belongs to its own RAR message, a message 3 (message3, MSG3) in an uplink resource designated by the MSG2, where the MSG3 carries a specific RNTI of the terminal device. The MSG3 may be an RRC layer message.

In Step 240, after receiving the MSG3, the network device may transmit a MSG4 message to the terminal device. The MSG4 includes a contention resolution message and an uplink transmission resource which is allocated by the network device to the terminal device. The MSG4 may be a MAC layer message.

After receiving the MSG4, the terminal device may detect whether the specific RNTI transmitted in the MSG3 is included in the contention resolution message transmitted by the network device. If yes, it indicates that the terminal device's random access procedure is successful; otherwise, it is considered that the random procedure is failed. After the random access procedure fails, the terminal device needs to initiate a random access procedure again from the first step.

Optionally, the MSG1 and the MSG2 may not use a HARQ mechanism, while the MSG3 and the MSG4 may use the HARQ mechanism.

If one random access attempt fails, the terminal device may also initiate a next random access attempt till a maximum number of retransmission times and/or a maximum retransmission time allowed at the network side is reached.

The terminal device generally performs random access by transmitting a preamble to the network device. After the terminal device transmits the preamble for a first time, the terminal device may transmit, to the network device, a preamble for random access for a second time if the current random access fails, and power for transmitting the preamble for the second time may be transmitting power upon power ramping of the power for transmitting the preamble for the first time. The power ramping may have a step length which is configured by the network device or which is pre-configured in the terminal device.

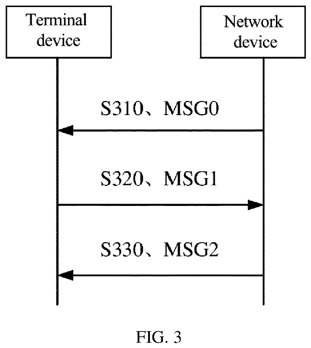

Reference may be made to FIG. 3 for a non-contention-based random access procedure, for example.

S310, the network device transmits a MSG0 to the terminal device, where the MSG0 may include a preamble configuration message which is used to indicate a random access preamble. The MSG0 may be a physical layer message.

S320, the terminal device transmits a MSG1 to the network device, where the MSG1 includes the random access preamble in S310. The MSG1 may be a physical layer message.

S330, the network device transmits a MSG2 to the terminal device, where the MSG2 may be a random access response message. The MSG2 may be a MAC layer message.

In the non-contention-based random access procedure, the terminal device may acquire a non-contention random access resource through RRC signaling and/or PDCCH signaling, and perform random access on the non-contention random access resource.

In the following, a handover procedure is taken as an example to describe the random access procedure of the terminal device. The handover procedure is not specifically limited in the embodiment of the present application with regard to its communication scenario which, for example, may be an LTE system or an NR system.

When a terminal device which is using a network service moves from a source cell to a target cell's coverage, or due to adjustment of traffic load in wireless transmission, activation operation and maintenance, device fault or other reasons, the system requires a handover of the terminal device's communication link with the source cell to the target cell in order to ensure continuity of communication and quality of service of the terminal device, that is, to perform a cell handover procedure. The source cell may be construed as a cell to which the terminal device is currently connected, while the target cell may be construed as a cell to which the terminal device is about to switch.

A manner in which the terminal device performs cell handover is not specifically limited in the embodiment of the present application. For example, the terminal device may perform intra-site switching (handover), that is to say, the source cell and the target cell belong to the same base station. For another example, the terminal device may also perform handover between base stations, that is to say, the source cell and the target cell belong to different base stations.

An interface used for cell handover between base stations is not limited in the embodiment of the present application. For example, the case may be cell handover based on an X2 interface or an Xn interface, or cell handover based on an S 1 interface or an N2 interface.

Taking the Xn interface as an example, the handover procedure of the terminal device may be divided into the following three stages: handover preparation, handover execution, and handover completion.

The handover preparation may include: the terminal device measuring and reporting link quality, transmitting a handover request to a source base station, and receiving a handover command transmitted by the source base station.

The handover execution may include: the terminal device immediately executing the handover procedure after receiving the handover command transmitted by the source base station. For example, disconnection from the source cell as well as completion of connection with the target cell (e.g., performing random access, transmitting an RRC handover completion message to the target base station, etc.), source-secondary node (secondary node, SN) status transfer, data forwarding, and the like may be performed.

The handover completion may include: the target cell performing link switching with an access and mobility management function (access and mobility management function, AMF) and a user plane function (user plane function, UPF), releasing of UE context of the source base station, and so on.

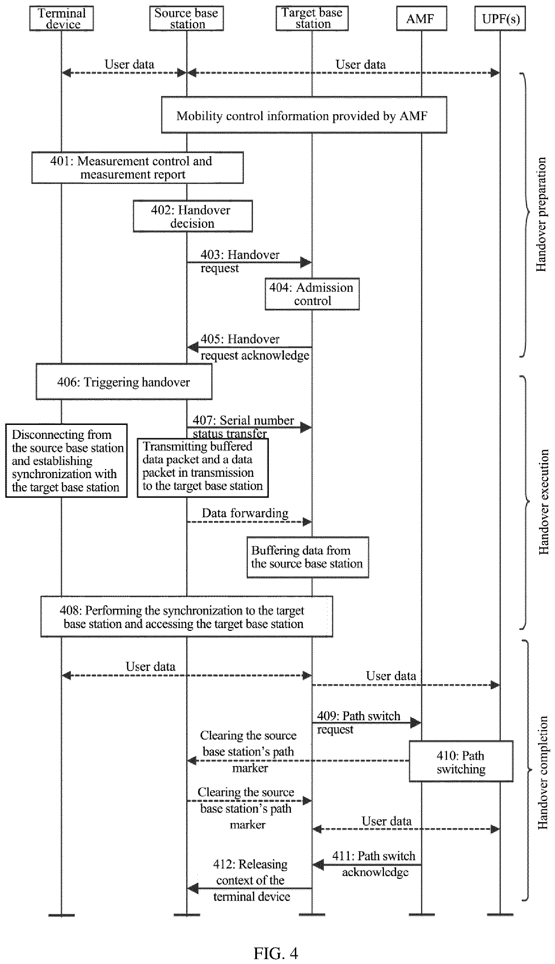

Detailed description will be given hereunder in conjunction with FIG. 4. Before the terminal device performs a handover procedure, for example, when the terminal device and the source base station have better signals therebetween, the terminal device may perform data transmission with the source base station and the UPF. Under a circumstance that the terminal device needs to perform cell handover, the following steps may be performed.

Specifically, as shown in FIG. 4, the handover preparation stage (401-405) may include the following:
in 401, the source base station triggers the terminal device to measure a neighboring cell, so that the terminal device can measure the neighboring cell and report a measurement result to the source base station.

In 402, the source base station evaluates the measurement result reported by the terminal device and decides whether to trigger handover.

In 403, if the source base station decides to trigger the handover, it may transmit a handover request to the target base station.

In 404, after receiving the handover request transmitted by the source base station, the target base station may start admission according to service information carried by the source base station, and perform radio resource configuration.

In 405, the target base station transmits a handover request acknowledge message to the source base station, and returns an admission result and radio resource configuration information in the target base station to the source base station. Up to now, the handover preparation stage is completed.

The handover execution stage (406-408), i.e. the second stage, may include the following.

In 406, after receiving the handover request acknowledge message from the target base station, the source base station may trigger the terminal device to perform handover. For example, the source base station may transmit a handover command to the target base station. The handover command may include a random access resource, a C-RNTI and/or a dedicated random access preamble for accessing to the target cell. If the source base station receives handover request acknowledgment (acknowledgment, ACK) messages transmitted by multiple target cells, the source base station may select, according to its own implementation, one of the target cells as a cell to which the terminal device is switched, and transmit to the terminal device a handover command corresponding to the cell through an RRC reconfiguration message.

In 407, the source base station may forward, to the target base station, buffer data, a data packet in transmission, a system serial number of data, etc. Moreover, the target base station may buffer the data received from the source base station.

In addition, the terminal device may disconnect (detach) from the source base station and establish synchronization with the target base station.

In 408, the terminal device performs the synchronization to the target base station. Up to now, the handover execution stage is completed.

The handover completion stage (409-412), i.e. the third stage, may include:
in 409, the target base station transmits a path switch request to an mobility management function (Access and Mobility Management Function, AMF).

In 410, after receiving the path switch request from the target base station, the AMF performs path switching with a user plane function (User Plane Function, UPF), and clears the source base station's path marker with the user plane.

In 411, after the path switching is completed, the AMF may transmit a path switch acknowledge message to the target base station.

In 412, the target base station transmits a context release message of the terminal device to the source base station, notifies the source base station that the handover is successful, and triggers the terminal device's context at the source base station. Up to now, the handover is completed.

The terminal device immediately starts a T304 timer after receiving the handover command, and starts downlink synchronization to the target cell, acquires master information block (master information block, MIB) information of the target cell, and then initiates random access. During the random access procedure, multiple preamble retransmissions are allowed till the random access is successful. Further, if the T304 timer expires, indicating that the handover fails, the terminal device may directly trigger an RRC connection re-establishment procedure.

The handover procedure in this manner is a handover procedure completely controlled by the network. However, for a high-speed mobile terminal device, if the above-mentioned manner is used for cell handover, due to high-speed movement to an area of poor coverage, the terminal device may not have time to or cannot transmit the measurement report and receive the handover command, resulting in that the terminal device cannot perform cell handover so that service interruption and other problems are incurred.

Therefore, an embodiment of the present application provides a cell handover method based on a conditional trigger, which can avoid the problem that there is no time or it is unable to transmit a measurement report and receive a handover command due to high-speed movement into an area of poor coverage.

It should be understood that in the embodiment of the present application, in light of the problem that there is frequent handover and the handover is prone to failure in both a high-speed mobile scenario and a high-frequency deployment scenario, the 3rd Generation Partnership Project (The 3rd Generation Partnership Project, 3GPP) takes account of a possibility of introducing, into LTE and NR systems, a conditional trigger-based handover procedure, of which basic principles lie in: when evaluating a conditional trigger associated with a target cell according to a condition configured on the network side, the terminal device performs handover to the target cell according to a pre-configured handover command (that is, triggering a random access procedure and transmitting a handover completion message) to avoid the problem that there is no time or it is unable to transmit a measurement report and receive a handover command due to high-speed movement into an area of poor coverage.

The network device may pre-configure a handover triggering condition and a handover command for the terminal device. The terminal device, after detecting that a target cell meets the handover triggering condition, may perform handover to the target cell directly according to the preset handover command without waiting to receive the handover command transmitted by the network device. Such switching method is particularly suitable for both the high-speed mobile scenario and the high-frequency deployment scenario where there is frequent handover and the handover is prone to failure.

It is understandable that for the conditional trigger-based handover procedure, the terminal device may also choose to request handover to the network device, and perform cell handover based on a handover command of the network device. That is to say, this method is also compatible with a traditional network control-based cell handover method.

The handover triggering condition may be a triggering condition based on signal quality. For example, the handover triggering condition may include: signal quality of the source cell being below a first threshold. If the terminal device detects that the signal quality of the source cell is below the first threshold, the terminal device may perform cell handover. For another example, the handover triggering condition may include: signal quality of the target cell being above a second threshold. If the terminal device detects that the signal quality of the target cell is above the second threshold, the terminal device may perform handover to the target cell. For another example, the handover triggering condition may include: signal quality of the source cell being below the first threshold and signal quality of the target cell being above the second threshold. The terminal device can perform handover to the target cell only if these two conditions are met at the same time.

The first threshold and the second threshold may have the same value or may have different values, which is not specifically limited in the embodiment of the present application.

Signal quality of a cell may be characterized by reference signal receiving power (reference signal receiving power, RSRP). The terminal device may receive reference signals of the source cell and the target cell, and measure receiving power of the reference signals to obtain RSRP corresponding to a cell. The larger the RSRP value, the better the signal quality of the cell; the smaller the RSRP value, the worse the signal quality of the cell.

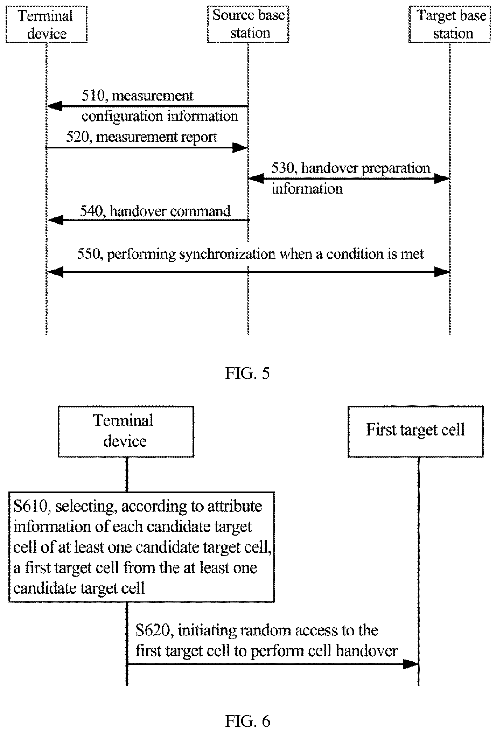

Specifically, reference may be made to FIG. 5 for a conditional trigger-based handover procedure which includes the following.

510, a source base station transmits measurement configuration information to a terminal device.

520, the terminal device transmits a measurement report to the source base station.

530, the source base station exchanges handover preparation information with a target base station.

540, the source base station transmits a handover command to the terminal device.

The handover command includes condition information for a cell or a beam.

550, when the condition is met, the terminal device performs synchronization with the target base station (the terminal device accesses the target base station).

For the network control-based handover procedure , the source base station may simultaneously or successively initiate X2/Xn/S 1/N2 interface-based handover requests to multiple target cells according to the measurement report transmitted by the terminal device, where each target cell, after performing access control according to its own radio resource management (radio resource management, RRM) algorithm, may transmit a handover request acknowledgement to the source base station through the base station to which it belongs. The handover request acknowledgement may carry a handover command generated by the target cell. The source base station may select, according to its own implementation, one of the target cells as a target cell to which the terminal device is switched, and transmit to the terminal device a handover command corresponding to the target cell through an RRC reconfiguration message, thereby achieving a handover procedure which is completely controlled by the network.

For the conditional trigger-based handover procedure, in order to ensure handover robustness so as to cope with mobility characteristics of various terminal devices and network deployment scenarios, the source base station may configure multiple target cells to the terminal device simultaneously. Since there are multiple target cells, there may be a possibility that the multiple target cells meet the handover triggering condition simultaneously or successively. However, since a subsequent handover triggering condition is completely executed by the terminal device, it is an urgent problem to be solved with regard to how the terminal device performs selection among the multiple target cells and how to perform the handover procedure.

An embodiment of the present application provides a method for cell handover, where the method can provide a terminal device with an implementation for selecting a cell. The method includes steps S610-S620.

S610, selecting, according to attribute information of each candidate target cell of at least one candidate target cell, a first target cell from the at least one candidate target cell.

The at least one candidate target cell may be a target cell meeting a handover triggering condition. The terminal device may select, from the at least one target cell, at least one candidate target cell that meets the handover triggering condition. The at least one target cell may be a target cell pre-configured by a network device for the terminal device, or a target cell agreed in a protocol, or a target cell obtained by the terminal device through detection. The network device may refer to a source base station.

As an example, the terminal device may maintain a set of candidate target cells, where the set of candidate target cells may include target cells that meet a handover triggering condition. For a target cell that does not meet the handover triggering condition, the terminal device may delete the target cell from the set. If the terminal device is making a random access attempt to a target cell to be deleted, the terminal device may stop the random access procedure of the current target cell.

For a terminal device that is moving, a target cell in a set of candidate target cells may change. For example, at a certain moment, a target cell 1 meets a handover triggering condition, where the target cell 1 belongs to the set of candidate target cells. However, at a next moment, due to the terminal device's movement, the target cell 1 may not meet the handover triggering condition, and then the terminal device may delete the target cell 1 from the set of candidate target cells.

If the set of candidate target cells includes at least one candidate target cell, the terminal device may select a first target cell from the at least one candidate target cell according to at least one piece of attribute information of each candidate target cell, and use the first target cell as a cell for handover.

S620, initiating random access to the first target cell to perform cell handover.

The terminal device may use the selected first target cell as a cell for handover, and initiate random access to the first target cell, to switch to the first target cell.

When performing cell handover based on a conditional trigger, the terminal device may select a target cell according to attribute information of a candidate target cell to prevent the terminal device from blindly selecting the target cell for handover, and thus a success rate of cell handover can be improved.

Before the terminal device performs conditional handover, the terminal device may also receive a handover command transmitted by the network device, where the handover command may include a handover command generated by at least one target cell. The handover command may include a random access resource and/or a dedicated random access preamble for accessing the target cell. After selecting a target cell, the terminal device may perform random access on a random access resource formulated by the target cell. If the handover command includes a dedicated random access preamble, the terminal device may perform non-contention-based random access using the dedicated random access preamble.

The at least one piece of attribute information of the candidate target cell includes at least one of the following categories: priority information, weight information, signal quality, an available resource, and admission capability.

The at least one piece of attribute information of the candidate target cell may be configured by the network device for the terminal device. For example, the network device may, when the handover command for the terminal device, configure the terminal device with at least one piece of attribute information of the at least one target cell. Alternatively, the at least one piece of attribute information of the target cell may be pre-configured in the terminal device, or specified by a protocol.

For a method of configuring attribute information through the network device, the network device may configure the attribute information for the terminal device according to network conditions or the like to such an extent that it is possible to achieve effective management and load balancing on the network side towards cell handover performed by the terminal device, which conforms to a design philosophy in an LTE system and an NR system regarding network-controlled mobility management on a terminal device in a connected state.

The priority information may refer to a priority of each candidate target cell, and a method for determination of the priority is not specifically limited in the embodiment of the present application. For example, the priority may be determined according to signal quality, an available resource, and/or admission capability of the target cell.

The network device may configure associated priority information for each target cell, or may configure associated priority information for a group of target cells, where target cells in one group of target cells have the same priority.

If there are multiple target cells that meet a triggering condition, the terminal device may select a first target cell according to priority information of the target cells. The first target cell may be a target cell with the highest priority or a target cell with the next highest priority. Such selection rule of the terminal device may be configured by the network device, or pre-configured in the terminal device, or specified in a protocol, which is not limited in the embodiment of the present application.

Taking a selection rule of selecting a target cell with highest priority as an example, if there are multiple target cells with highest priority, the terminal device may randomly select one, or may make a further selection according to further pieces of attribute information of the target cells. For example, the further selection may be made according to signal quality of the target cells, e.g., the first target cell may be a cell with best signal quality of the multiple target cells with highest priority.

Also, taking a selection rule of selecting a target cell with highest priority as an example, when the terminal device is performing random access to a certain target cell, if a further target cell with a higher priority configuration meets the handover triggering condition, the terminal device may switch to the target cell with the higher priority for random access.

The terminal device switching to the target cell with the higher priority for the random access may refer to a case in which the terminal device, upon detection of the target cell with the higher priority, immediately performs the random access to the target cell with the higher priority; or may refer to a case in which the terminal device performs the random access to the target cell with the higher priority followed by a failure in the current random access procedure performed for the current target cell.

The performing the random access to the target cell with the higher priority followed by the failure in the random access procedure for the current target cell may refer to a case in which: the terminal device may proceed with the current random access to the current target cell, and the terminal device accesses the current target cell and transmits a handover completion message if the current random access procedure to the target cell is successful; the terminal device may stop making a random access attempt to the current target cell but with a handover to the target cell with the higher priority for the random access if the current random access procedure performed for the current target cell fails. Such method can ensure that the terminal device quickly completes the cell handover, ensure service continuity of the terminal device, and prevent the terminal device from constantly changing a target cell for random access in such a manner that the cell handover cannot be completed.

If there are multiple target cells with the higher priority configuration that meet the handover triggering condition, the terminal device may randomly select one or may select one with best signal quality for random access.

The current target cell may be selected based on priority or a further piece of attribute information, which is not limited in the embodiment of the present application.

When configuring priority information for the terminal device, the network device may only configure priority information of multiple target cells, without telling the terminal device based on what factors a priority level is determined. That is, the network device may hide an implementation algorithm for setting the priority level, so that other evil forces may be prevented from forging the network device according to the implementation algorithm of the network device to cause insecurity of the communication system.

For the weight information, the network device may configure associated weight information for each candidate target cell, or may configure associated weight information for a group of candidate target cells, where each candidate target cell of the group of candidate target cells has the same weight information.

Optionally, the weight information of the candidate target cell may be a specific value or an interval value. For example, the weight information of the candidate target cell may be 0.2, or it may range from 0 to 0.2, which is not limited in the embodiment of the present application.

The terminal device may select the first target cell based on the weight information. For example, the terminal device may select a cell with highest weight information as the first target cell, or a cell with second highest weight information as the target cell. For another example, the terminal device may also select the first target cell according to a random number that is generated. Similar to the priority, the method for determining the selection rule by the terminal device is not limited in the embodiment of the present application, which may be configured by the network device, or specified in the protocol, or pre-configured in the terminal device. The case is similar with regard to selection rules involved in the following, and description will not be repeated hereunder for the sake of redundancy.

The terminal device may have, recorded therein, a corresponding relationship between a random number and the weight information of the target cell, and the terminal device may select the first target cell according to the generated random number as well as the corresponding relationship between the random number and the weight information. For example, if there are three candidate target cells in a set of candidate target cells, they are respectively a target cell 1, a target cell 2 and a target cell 3 which respectively have a weight of 0.2, 0.3 and 0.5, alternatively, the weight information may be an interval value, for example, the target cell 1, the target cell 2, and the target cell 3 respectively have a weight of 0-0.2, 0.2-0.5, and 0.5-1. The terminal device may generate a random number ranging from 0 to 1. It is assumed that the corresponding relationship between the random number and the weight information includes: selecting a cell having a weight of 0 to 0.2 if the generated random number ranges from 0 to 0.2; selecting a cell having a weight of 0.2 to 0.5 if the generated random number ranges from 0.2 to 0.5; selecting a cell having a weight of 0.5 and 1 if the generated random number ranges from 0.5 to 1. If the random number generated by the terminal device is 0.4, the terminal device may select a target cell having weight information of 0.2 to 0.5, and then the terminal device may take the target cell 2 as the first target cell.

In the case of multiple terminal devices configured with same target cells, since the random number generated by each terminal device is random, the use of the random number to select a target cell may prevent the multiple terminal devices from selecting the same target cell for handover, thereby achieving the purpose of load balancing. For example, for multiple terminal devices within the same carriage on a high-speed train, when the network device configures same target cells for the multiple terminal devices and the multiple terminal devices also have the same set of candidate target cells which is determined based on a handover triggering condition, if the terminal devices randomly select target cells based on weight information, a probability at which the multiple terminal devices generate the same random number is particularly small since the random number generated by each terminal device is random, and thus it is possible to prevent the multiple terminal devices from selecting the same target cell so that the purpose of load balancing can be achieved.

Similar to configuration information on the priority, when the network device configures weight information of multiple target cells to the terminal device, there is no need to tell the terminal device based on what factors the weight information is determined. That is to say, the network device may hide an implementation algorithm for setting the weight information, so that evil forces may be prevented from forging the network device according to the implementation algorithm of the network device to cause insecurity of the communication system.

The terminal device may also select the first target cell based on signal quality of the candidate target cell, where the selection rule may be to preferentially select a cell with best signal quality or a cell with second best signal quality. For example, the terminal device may select a target cell with best signal quality as the first target cell, or may select a target cell with second best signal quality as the first target cell.

The signal quality of the target cell can be characterized by RSRP. The larger the RSRP value, the better the signal quality of the cell. The terminal device may measure receiving power of a reference signal of the target cell, and use the receiving power as a basis for target cell selection.

The admission capability of a candidate target cell may include admission capability for a PDU session and/or admission capability for a QoS flow.

The admission capability in terms of PDU sessions can be characterized by the number of admissible PDU sessions. For example, the terminal device may select, a target cell with the largest number of admissible PDU sessions, as the first target cell.

The admission capability in terms of QoS flows can be characterized by a size of an admissible QoS and/or a number of admissible QoS flows. The selection rule may be to preferentially select, a cell with a largest admissible QoS and/or a largest number of admissible QoS flows. For example, the terminal device may select, a target cell with a largest admissible QoS value, as the first target cell. For another example, the terminal device may select, a target cell with a largest number of admissible QoS flows, as the first target cell. For another example, the terminal device may select, a target cell with a largest number of admissible QoS flows and a largest admissible QoS value, as the first target cell.

The admission capability of a candidate target cell may be configured by the network. The network device may configure the terminal device with admission capability of each candidate target cell while configuring the terminal device with the handover command.

The available resource may include an available frequency domain resource and/or an available random access resource. The available frequency domain resource may include an available bandwidth part (band width part, BWP) resource and/or an available aggregated carrier resource.

The available BWP resource may include the first activated BWP resource. The terminal device may select the first target cell based on the first activated BWP. For example, the selection rule may be to preferentially select a cell with a largest bandwidth of the first activated BWP, and the terminal device may then use a target cell with a largest bandwidth of the first activated BWP as the first target cell.

The available random access resource may include an available random access channel (random access channel, RACH) resource, and the terminal device may select, a cell configured with a largest number of RACH resources, as the first target cell.

The available RACH resource may include an available dedicated RACH resource. The dedicated RACH resource may include a dedicated RACH resource based on a channel state information reference signal (channel state information reference signal, CSI-RS) and/or a synchronization signal block (synchronization signal block, SSB). The terminal device may select, a cell configured with a dedicated RACH resource, as the target cell.

The selection rule may also include a preset determination sequence of the at least one piece of attribute information. The selecting, according to the at least one piece of attribute information of each candidate target cell of the at least one candidate target cell, the first target cell from the at least one candidate target cell may include: selecting, according to the preset determination sequence of the at least one piece of attribute information, the first target cell by sequentially determining the at least one piece of attribute information, where the sequentially determining the at least one piece of attribute information may include selecting, according to a current piece of attribute information, among multiple candidate target cells which are selected from a previous piece of attribute information, till there is only one target cell that is selected or all pieces of attribute information have been traversed.

By configuring an execution sequence of multiple categories of attribute information, it is possible to avoid a phenomenon that the rules conflict with each other, when selecting the target cell.

The terminal device may perform cell selection based on the at least one piece of attribute information in sequence. If there is only one cell remaining after selection (selection and deletion) from a previous piece of attribute information, the terminal device may stop performing a selection based on a next piece of attribute information, and use this cell as the first target cell. If there are multiple cells after selection (selection and deletion) from a previous piece of attribute information, the selection may proceed with a next piece of attribute information. If there are still multiple target cells that meet the condition after all pieces of attribute information have been traversed, the terminal device may randomly select one of the cells as the first target cell.

For example, if various selection rules are configured in the terminal device, these rules may also be configured with an execution sequence, where the selection rule may be a selection rule based on the attribute information described above. For a case where a rule 1, a rule 2 and a rule 3 are configured, the rule 1, the rule 2 and the rule 3 may also be configured with an execution sequence, assuming that the execution sequence is rule 1-rule 3-rule 2. Among them, the rule 1 is to select a cell with a largest number of admissible PDU sessions and/or admissible QoS flows, the rule 2 is to select a cell configured with a dedicated RACH resource, and the rule 3 is to select a cell with strongest signal quality.

When selecting a target cell, the terminal device may firstly make a selection according to the rule 1 to select a cell with a largest number of admissible PDU sessions and/or admissible QoS flows. If there is only one target cell that meets the rule 1, the terminal device may directly use this cell as the first target cell, and there is no need to make a selection according to the rule 3 and the rule 2. If there are multiple target cells that meet the rule 1, the terminal device may proceed with execution of the rule 3 to further select a cell with strongest signal quality. If the number of cells selected according to the rule 3 is still greater than 1, proceed with execution of the rule 2 to select a cell configured with a dedicated RACH resource, and so on.

If the number of cells selected after all the rules have been traversed is still greater than 1, the terminal device may randomly select one of the cells as the first target cell.

In an embodiment of the present application, also, a maximum number of access times and/or a maximum access duration may be configured for each candidate target cell. A switch to another target cell for random access is possible if the random access performed by the terminal device to a target cell reaches a maximum number of access times and/or a maximum access duration of the target cell.

The maximum number of access times and/or the maximum access duration of each candidate target cell may be configured by the network device to the terminal device.

Taking the first target cell as an example, the terminal device may first determine the first target cell which may be selected randomly or in the manner described above. After determining the first target cell, the terminal device may initiate random access to the first target cell. If the random access to the first target cell reaches a maximum number of access times and/or a maximum access duration allowed by the first target cell, the terminal device may initiate random access to a third target cell.

The third target cell may be a target cell that is randomly selected, or may be a target cell selected in the manner described above. For example, the third target cell is a cell selected according to the priority and/or the weight information.

For the maximum access duration, it can be achieved through a timer. When the terminal device starts to perform random access to the first target cell, the timer for the first target cell is started; and when the timer expires, select a third target cell for random access.

Optionally, a maximum duration may also be specified for the entire handover procedure of the terminal device, for example, a timer T304 is used to indicate the duration for cell handover. When the terminal device performs handover to a first target cell, the timer T304 may be started; and if the timer T304 expires, stop a random access attempt. If all candidate target cells have been traversed and the timer T304 has not expired, the terminal device may repeat the above process till access to a target cell is successful or the timer T304 expires.

The terminal device initiating the random access to the first target cell may be achieved by transmitting a random access preamble to the first target cell. The random access preamble may be a contention-based random access preamble or a non-contention-based random access preamble.

The contention-based random access preamble may be obtained by the terminal device, after obtaining synchronization with the first target cell, through acquiring MIB information of the first target cell. The non-contention-based random access preamble may be configured to the terminal device when the network device configures the terminal device with a handover command of the first target cell.

The power for the terminal device to transmit the preamble may be pre-configured by the network device. For example, the network device may configure transmitting power of the preamble in a handover command, and the terminal device may use the pre-configured power to transmit the preamble.

If the first target cell is a cell that the terminal device switches to for the first time, the terminal device which, when transmitting a preamble to the first target cell for the first time, may use the pre-configured power to transmit the preamble. After the first random access fails, the terminal device may initiate a second random access attempt to the first target cell, and power for transmitting the random access preamble for the second time is power upon power ramping of the power for transmitting the preamble for the first time.

The power ramping may have a step length which is specified in a protocol or which is configured by the network device to the terminal device. Different cells may have the same step length or different step lengths in terms of their power ramping.

If the random access to the first target cell fails, the terminal device may initiate random access to a second target cell. The initiating the random access to the first target cell may include transmitting, to the first target cell, a first preamble for random access, and the initiating the random access to the second target cell may include transmitting, to the second target cell, a second preamble for random access. Power for transmitting the second preamble by the terminal device may be determined according to power upon power ramping of power for transmitting the first preamble.

The power upon the power ramping of the power for transmitting the first preamble is set to first power. For example, the power for the terminal device to transmit the second preamble may be equal to the first power. For another example, the power for the terminal device to transmit the second preamble may be folds of the first power. For another example, the power for the terminal device to transmit the second preamble may be power upon another power ramping of the first power.

For example, a handover to the second target cell is made for random access after the terminal device makes three random access attempts to the first target cell. Power for the terminal device to transmit the preamble to the first target cell for the first time may be pre-configured and set to P1. After the first random access fails, the terminal device initiates the second random access attempt to the first target cell, and power for transmitting the preamble for the second time is power upon power ramping of PI, and is set to P2. After the second random access fails, the terminal device initiates the third random access attempt to the first target cell, and power for transmitting the preamble for the third time is power upon power ramping of P2, and is set to P3. If the third random access still fails, the terminal device may initiate random access to a second target cell. When a preamble is transmitted to the second target cell for the first time, power for transmitting the preamble can be the power for transmitting the preamble to the first target cell for the third time, that is to say, the terminal device may transmit the preamble to the second target cell at a power of P3.

The terminal device initiating the random access to the second target cell may be transmitted when it is detected that the second target cell has a priority higher than a priority of the first target cell, or may be transmitted when the random access to the first target cell reaches a maximum number of access times and/or a maximum access duration allowed by the first target cell, which is not specifically limited in the embodiment of the present application.

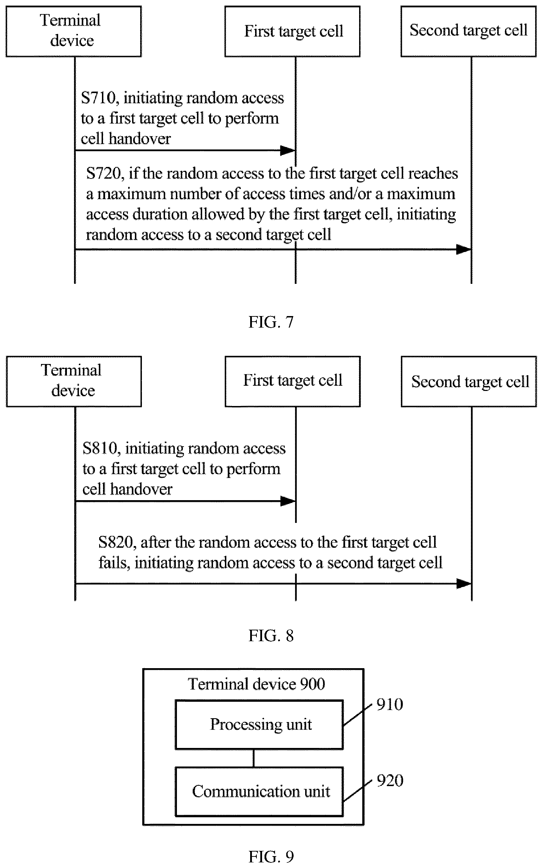

FIG. 7 shows another method for cell handover according to an embodiment of the present application. The method includes steps S710-S720. Related technical solutions in the method shown in FIG. 7 may also adopt the technical solutions in the method shown in FIG. 6, which will not be repeated here.

S710, a terminal device initiates random access to a first target cell to perform cell handover.

S720, if the random access performed by the terminal device to the first target cell reaches a maximum number of access times and/or a maximum access duration allowed by the first target cell, initiating random access to a second target cell, where the second target cell is a cell used for handover.

The first target cell and the second target cell may be target cells randomly selected by the terminal device from at least one target cell, or may be target cells selected based on the attribute information described above.

Taking the priority as an example, the first target cell is a target cell with highest priority of the at least one target cell, when the random access to the first target cell reaches a maximum number of access times and/or a maximum access duration allowed by the first target, moving on to initiate random access to a second target cell. The second target cell is a target cell with highest priority from a set of candidate target cells other than the first target cell.

The random access initiated by the terminal device to both the first target cell and the second target cell is random access during a cell handover procedure. In other words, the random access initiated by the terminal device to both the first target cell and the second target cell is random access performed before a timer used in a handover procedure expires. The timer may be, for example, a timer T304.

The terminal device initiating the random access to the first target cell includes the terminal device transmitting, to the first target cell, a first preamble for random access; and the terminal device initiating the random access to the second target cell includes transmitting, to the second target cell, a second preamble for random access. Power for the terminal device to transmit the second preamble is determined according to power upon power ramping of power for transmitting the first preamble.

For example, the power for transmitting the second preamble may be equal to the power upon the power ramping of the power for transmitting the first preamble. For another example, the power for transmitting the second preamble may be equal to folds of the power upon the power ramping of the power for transmitting the first preamble.

According to the technical solutions provided in the embodiment of the present application, it is able to avoid the problem that the terminal device always initiates random access to the same target cell to result in a decrease in a success rate of the random access. For example, if the first target cell is overloaded, the first target cell does not allow the terminal device to access the first target cell. If the terminal device continues to initiate random access to the first target cell, a result will be that the access always fails. However, if the terminal device moves on to a second target cell to initiate random access, a success rate of random access can be improved so that the terminal device switches to the target cell as soon as possible, thereby ensuring service continuity.

FIG. 8 shows another method for cell handover according to an embodiment of the present application. The method includes steps S810-S820. Related technical solutions in the method shown in FIG. 8 may also adopt the technical solutions in the method shown in FIG. 6 and FIG. 7, which will not be repeated here.

S810, a terminal device initiates random access to a first target cell to perform cell handover.

S820, after the random access to the first target cell fails, the terminal device initiates random access to a second target cell, where the initiating the random access to the first target cell includes transmitting, to the first target cell, a first preamble for random access, and the initiating the random access to the second target cell includes transmitting, to the second target cell, a second preamble for random access, and power for transmitting the second preamble is determined according to power upon power ramping of power for transmitting the first preamble.

Optionally, the power for transmitting the second preamble is equal to the power upon the power ramping of the power for transmitting the first preamble.

The power upon the power ramping of the power for transmitting the first preamble is used as the power for transmitting the second preamble, which can increase a probability at which the random access is successful so that the terminal device completes cell handover as soon as possible, thereby ensuring service continuity.

It is understandable that the case described in the embodiment of the present application with regard to the terminal device initiating the random access to the target cell may refer to a case where the terminal device initiates random access to a base station to which the target cell belongs.

Detailed descriptions have been made hereinabove with regard to the methods for cell handover provided in the embodiments of the present application; and detailed descriptions will be made hereunder in conjunction with FIG. 9 to FIG. 15 with regard to the apparatuses in the embodiments of the present application. The apparatus embodiments correspond to the method embodiments, and thus reference may be made to the foregoing method embodiments for parts that have not been described in detail.

FIG. 9 shows a terminal device 900 according to an embodiment of the present application. The terminal device shown in FIG. 9 may refer to the terminal device in the method embodiments. The terminal device 900 includes a processing unit 910 and a communication unit 920.

The processing unit 910 is configured to select, according to at least one piece of attribute information of each candidate target cell of at least one candidate target cell, a first target cell from the at least one candidate target cell, where the at least one piece of attribute information includes at least one of the following categories: priority information, weight information, signal quality, an available resource, and admission capability.

The communication unit 920 is configured to initiate random access to the first target cell to perform cell handover.

Optionally, the admission capability includes admission capability for a protocol data unit PDU session and/or admission capability for a quality of service QoS flow.

Optionally, the admission capability is characterized by a number of admissible PDU sessions and/or a number of admissible QoS flows.

Optionally, the available resource includes an available frequency domain resource and/or an available random access resource.

Optionally, the available frequency domain resource includes an available bandwidth part BWP resource and/or an available aggregated carrier resource. The available random access resource includes an available dedicated random access channel RACH resource.

Optionally, the dedicated RACH resource includes a dedicated RACH resource based on a channel state information reference signal CSI-RS and/or a synchronization signal block SSB.

Optionally, the communication unit 920 is further configured to: receive at least one of the following categories of the at least one candidate target cell transmitted by a network device: priority information, weight information, admission capability, and an available resource.

Optionally, the first target cell is a cell with highest priority of the at least one candidate target cell.

Optionally, the first target cell is a cell with best signal quality of multiple candidate target cells with highest priority.

Optionally, the processing unit 910 is further configured to: generate a random number; and select the first target cell according to the generated random number and a corresponding relationship between at least one random number and the at least one candidate target cell.

Optionally, the processing unit 910 is configured to: select, according to a preset determination sequence of the at least one piece of attribute information, the first target cell by sequentially determining the at least one piece of attribute information, where the sequentially determining the at least one piece of attribute information includes selecting, according to a current piece of attribute information, among multiple candidate target cells which are selected from a previous piece of attribute information.

Optionally, the communication unit 920 is configured to: during a process of random access to the first target cell, if it is detected that a second target cell has a priority higher than a priority of the first target cell, initiate random access to the second target cell after current random access to the first target cell fails.

Optionally, the second target cell is a cell with best signal quality of multiple candidate target cells with higher priority than the first target cell.

Optionally, the communication unit 920 is configured to: initiate random access to a third target cell under a circumstance that the random access to the first target cell reaches a maximum number of access times and/or a maximum access duration allowed by the first target cell and the access to the first target cell is still not successful.

Optionally, the second target cell is a cell with best signal quality of multiple candidate target cells with higher priority than the first target cell.

Optionally, the processing unit 910 is configured to: select a third target cell for random access if the random access to the first target cell reaches a maximum number of access times and/or a maximum access duration allowed by the first target cell and the access to the first target cell is still not successful.

Optionally, the communication unit 920 is configured to: receive the maximum number of access times and/or the maximum access duration allowed by the first target cell transmitted by a network device.

Optionally, the initiating the random access to the first target cell includes transmitting, to the first target cell, a first preamble for random access, and where the initiating the random access to the third target cell includes transmitting, to the third target cell, a second preamble for random access, and power for transmitting the second preamble is determined according to power upon power ramping of power for transmitting the first preamble.

Optionally, the power for transmitting the second preamble is equal to the power upon the power ramping of the power for transmitting the first preamble.

Optionally, the at least one candidate target cell is a cell that meets a handover triggering condition.

It should be understood that the terminal device 900 can perform corresponding operations performed by the terminal device in the foregoing method, and for the sake of brevity, details will not be described here again.

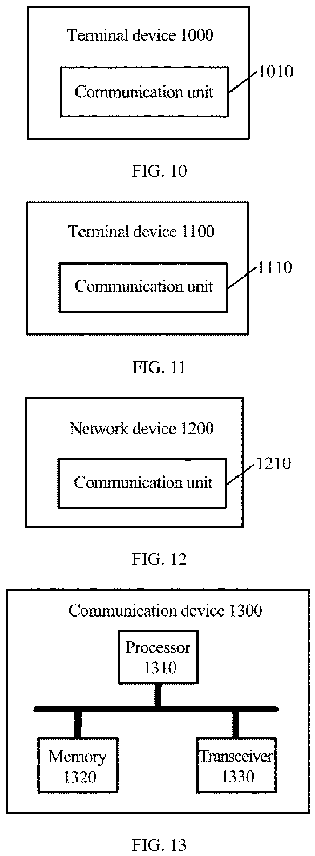

FIG. 10 shows another terminal device 1000 according to an embodiment of the present application. The terminal device shown in FIG. 10 may refer to the terminal device in the method embodiments. The terminal device 1000 includes a communication unit 1010.

The communication unit 1010 is configured to initiate random access to a first target cell to perform cell handover.

The communication unit 1010 is configured to: when the random access to the first target cell reaches a maximum number of access times and/or a maximum access duration allowed by the first target cell, initiate random access to a second target cell, where the second target cell is a cell used for handover.

Optionally, the initiating the random access to the first target cell includes transmitting, to the first target cell, a first preamble for random access, and where the initiating the random access to the second target cell includes transmitting, to the second target cell, a second preamble for random access, and power for transmitting the second preamble is determined according to power upon power ramping of power for transmitting the first preamble.

Optionally, the power for transmitting the second preamble is equal to the power upon the power ramping of the power for transmitting the first preamble.

It should be understood that the terminal device 1000 can perform corresponding operations performed by the terminal device in the foregoing method, and for the sake of brevity, details will not be described here again.

FIG. 11 shows another terminal device 1100 according to an embodiment of the present application. The terminal device shown in FIG. 11 may refer to the terminal device in the method embodiments. The terminal device 1100 includes a communication unit 1110.

The communication unit 1110 is configured to initiate random access to a first target cell to perform cell handover.

The communication unit 1110 is configured to: after the random access to the first target cell fails, initiate random access to a second target cell, where the initiating the random access to the first target cell includes transmitting, to the first target cell, a first preamble for random access, and where the initiating the random access to the second target cell includes transmitting, to the second target cell, a second preamble for random access, and power for transmitting the second preamble is determined according to power upon power ramping of power for transmitting the first preamble.

Optionally, the power for transmitting the second preamble is equal to the power upon the power ramping of the power for transmitting the first preamble.

It should be understood that the terminal device 1100 can perform corresponding operations performed by the terminal device in the foregoing method, and for the sake of brevity, details will not be described here again.

FIG. 12 is a schematic block diagram illustrating another network device 1200 according to an embodiment of the present application. The network device shown in FIG. 12 may refer to the network device or the source base station in the method embodiments. The network device 1200 includes a communication unit 1210.

The communication unit 1210 is configured to transmit at least one piece of attribute information of each candidate target cell of at least one candidate target cell to a terminal device, where the at least one piece of attribute information includes at least one of the following categories: priority information, weight information, signal quality, an available resource, and admission capability, and the at least one piece of attribute information is used by the terminal device to perform cell handover.

Optionally, the admission capability includes admission capability for a protocol data unit PDU session and/or admission capability for a quality of service QoS flow.

Optionally, the admission capability is characterized by a number of admissible PDU sessions and/or a number of admissible QoS flows.

Optionally, the available resource includes an available frequency domain resource and/or an available random access resource.

Optionally, the available frequency domain resource includes an available bandwidth part BWP resource and/or an available aggregated carrier resource.

Optionally, the available random access resource includes an available dedicated random access channel RACH resource.

Optionally, the dedicated RACH resource includes a dedicated RACH resource based on a channel state information reference signal CSI-RS and/or a synchronization signal block SSB.

Optionally, the communication unit 1210 is configured to: transmit, to the terminal device, a maximum number of access times and/or a maximum access duration allowed by each candidate target cell of the at least one candidate target cell.

Optionally, the communication unit 1210 is configured to: transmit a preset determination sequence of the at least one piece of attribute information to the terminal device, where the preset determination sequence is used by the terminal device to select a target cell.

Optionally, the at least one candidate target cell is a cell that meets a handover triggering condition.

It should be understood that the network device 1200 can perform corresponding operations performed by the network device in the foregoing method, and for the sake of brevity, details will not be described here again.

FIG. 13 is a schematic structural diagram illustrating a communication device 1300 according to an embodiment of the present application. The communication device 1300 show in FIG. 13 includes a processor 1310, where the processor 1310 may call and run a computer program from a memory to implement a method in an embodiment of the present application.

Optionally, as shown in FIG. 13, the communication device 1300 may further include a memory 1320, where the processor 1310 may call and run a computer program from the memory 1320 to implement the method in the embodiments of the present application.

The memory 1320 may be a separate device independent of the processor 1310, or may be integrated in the processor 1310.

Optionally, as shown in FIG. 13, the communication device 1300 may further include a transceiver 1330, and the processor 1310 may control the transceiver 1330 to communicate with a further device, in particular, it may transmit information or data to the further device, or receive information or data transmitted from the further device.

The transceiver 1330 may include a transmitter and a receiver. The transceiver 1330 may further include an antenna, and there may be one or more antennas in number.

Optionally, the communication device 1300 may be specifically a terminal device according to an embodiment of the present application, and the communication device 1300 may implement corresponding processes implemented by the terminal devices in the methods according to the embodiments of the present application. For the sake of brevity, details will not be described here again.

Optionally, the communication device 1300 may be specifically a network device according to an embodiment of the present application, and the communication device 1300 may implement corresponding processes implemented by the network device in each method according to the embodiments of the present application. For the sake of brevity, details will not be described here again.

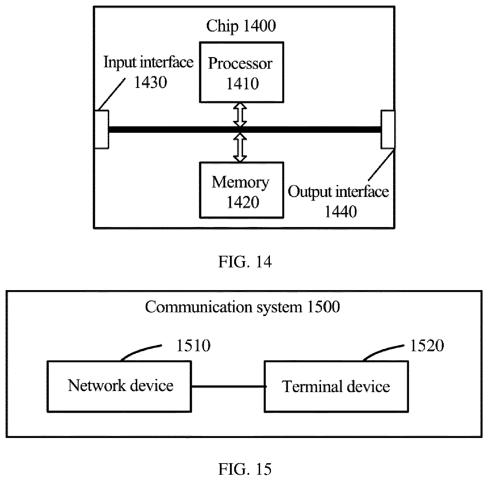

FIG. 14 is a schematic structural diagram of a chip according to an embodiment of the present application. The chip 1400 shown in FIG. 14 includes a processor 1410 which may call and run a computer program from a memory to implement a method in an embodiment of the present application.

Optionally, as shown in FIG. 14, the chip 1400 may further include a memory 1420. The processor 1414 may call and run a computer program from the memory 1420 to implement a method in an embodiment of the present application.

The memory 1420 may be a separate device independent of the processor 1410 or may be integrated in the processor 1410.

Optionally, the chip 1400 may further include an input interface 1430. The processor 1410 may control the input interface 1430 to communicate with a further device or chip, in particular, to acquire information or data transmitted by the further device or chip.

Optionally, the chip 1400 may further include an output interface 1440. The processor 1410 may control the output interface 1440 to communicate with a further device or chip, in particular, to output information or data to the further device or chip.

Optionally, the chip can be applied to a terminal device in an embodiment of the present application; moreover, the chip may perform corresponding processes implemented by the terminal devices in the methods according to the embodiments of the present application. For the sake of brevity, details will not be described here again.

Optionally, the chip can be applied to a network device in an embodiment of the present application; moreover, the chip may perform corresponding processes implemented by the network device in each method according to the embodiments of the present application. For the sake of brevity, details will not be described here again.

It should be understood that the chip mentioned in the embodiment of the present application may also be termed as a system level chip, a system chip, a chip system or a system-on-chip, or the like.

It should be understood that the processor according to the embodiment of the present application may be an integrated circuit chip with signal processing capabilities. During implementation, the steps of the foregoing method embodiments can be completed by a hardware integrated logic circuit or a software instruction in the processor. The above processor may be a general purpose processor, a digital signal processor (Digital Signal Processor, DSP), an application specific integrated circuit (Application Specific Integrated Circuit, ASIC), a field programmable gate array (Field Programmable Gate Array, FPGA) or other programmable logic devices, discrete gate or transistor logic devices, discrete hardware components. The methods, steps, and logical block diagrams disclosed in the embodiments of the present application may be implemented or performed. The general purpose processor may be a microprocessor or the processor may also be any conventional processor or the like. The steps of the methods disclosed in conjunction with the embodiments of the present application may be directly implemented by a hardware decoding processor, or may be performed by a combination of hardware and software modules in a decoding processor. The software module may be located in a storage medium mature in the art, such as a random access memory, a flash memory, a read only memory, a programmable read only memory, an electrically erasable programmable memory, a register, or the like. The storage medium is located in the memory. The processor reads information in the memory and performs the steps of the above methods in combination with its hardware.

It can be understood that the memory in the embodiments of the present application may be a volatile memory or a non-volatile memory, or may include both the volatile memory and the non-volatile memory. The non-volatile memory may be a read-only memory (Read-Only Memory, ROM), a programmable read only memory (Programmable ROM, PROM), an erasable programmable read only memory (Erasable PROM, EPROM), an electrically erasable programmable read only memory (Electrically EPROM, EEPROM) or a flash memory. The volatile memory may be a random access memory (Random Access Memory, RAM), which is used as an external cache. By way of exemplary but not restrictive illustration, many forms of RAMs may be available, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM) and a direct Rambus random access memory (Direct Rambus RAM, DR RAM). It should be noted that the memories of the systems and methods described herein are intended to include, but are not limited to these and any other suitable types of memories.

It should be understood that the above mentioned memory is exemplary but not restrictive illustration, for example, the memory in the embodiment of the present application may also be a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synch link dynamic random access memory (Synch Link DRAM, SLDRAM) and a direct Rambus random access memory (Direct Rambus RAM, DR RAM), etc. That is to say, the memories in the embodiments of the present application are intended to include, but are not limited to these and any other suitable types of memories.

FIG. 15 is a schematic block diagram illustrating a communication system 1500 according to an embodiment of the present application. As shown in FIG. 15, the communication system 1500 includes a network device 1510 and a terminal device 1520.

The network device 1510 is configured to: transmit at least one piece of attribute information of each candidate target cell of at least one candidate target cell to a terminal device, where the at least one piece of attribute information includes at least one of the following categories: priority information, weight information, signal quality, an available resource, and admission capability, and the at least one piece of attribute information is used by the terminal device to perform cell handover.

The terminal device 1520 is configured to: select, according to the at least one piece of attribute information of the each candidate target cell of the at least one candidate target cell, a first target cell from the at least one candidate target cell, where the at least one piece of attribute information includes at least one of the following categories: priority information, weight information, signal quality, an available resource, and admission capability; and initiate random access to the first target cell to perform cell handover.

Optionally, the network device 1510 may be used to implement corresponding functions implemented by the network device in the foregoing method; moreover, the composition of the network device 1510 may be that shown in the network device 1200 of FIG. 12, for the sake of brevity, details will not be described here again.

Optionally, the terminal device 1520 may be used to implement corresponding functions implemented by the terminal devices in the foregoing methods; moreover, the composition of the terminal device 1520 may be that shown in the terminal devices of FIG. 9, FIG. 10 and FIG. 11, for the sake of brevity, details will not be described here again.

An embodiment of the present application further provides a computer readable storage medium configured to store a computer program. Optionally, the computer readable storage medium may be applied to the network device in the embodiments of the present application, and the computer program enables a computer to perform corresponding processes implemented by the network device in each method of the embodiments of the present application. For the sake of brevity, details will not be described here again. Optionally, the computer readable storage medium may be applied to the terminal devices in the embodiments of the present application, and the computer program enables a computer to perform corresponding processes implemented by the terminal devices in the methods of the embodiments of the present application. For the sake of brevity, details will not be described here again.

An embodiment of the present application further provides a computer program product including a computer program instruction. Optionally, the computer program product may be applied to the network device in the embodiments of the present application, and the computer program instruction enables a computer to perform corresponding processes implemented by the network device in each method of the embodiments of the present application. For the sake of brevity, details will not be described here again. Optionally, the computer program product may be applied to the terminal devices in the embodiments of the present application, and the computer program instruction enables a computer to perform corresponding processes implemented by the terminal devices in the methods of the embodiments of the present application. For the sake of brevity, details will not be described here again.

An embodiment of the present application further provides a computer program. Optionally, the computer program may be applied to the network device in the embodiments of the present application. The computer program which, when running on a computer, enables the computer to perform corresponding processes implemented by the network device in each method of the embodiments of the present application. For the sake of brevity, details will not be described here again. Optionally, the computer program may be applied to the terminal devices in the embodiments of the present application. The computer program which, when running on a computer, enables the computer to perform corresponding processes implemented by the terminal devices in the methods of the embodiments of the present application. For the sake of brevity, details will not be described here again.

It should be understood that the terms "system" and "network" are often used interchangeably herein. The term such as "and/or" herein merely describes an association relationship between associated objects, which indicates that there may be three relationships, for example, A and/or B may indicate presence of A only, of both A and B, and of B only. In addition, the character "/" herein generally indicates that contextual objects have an "or" relationship.

It also should be understood, in an embodiment of the present invention, "B corresponding to A" means that B is associated with A, and B can be determined according to A. However, it should also be understood that determining B according to A does not mean that B is determined according to A only, but that B can also be determined according to A and/or other information.

It may be known to persons of ordinary skill in the art that, the units and the algorithm steps of each example that are described with reference to the embodiments disclosed herein can be implemented by electronic hardware or a combination of electronic hardware and computer software. The situation whether these functions are performed by hardware or software depends on specific applications and design constraints of the technical solution. Persons skilled in the art may implement the described functions by using different methods for each specific application, and such implementation should not be regarded as going beyond the scope of the present application.

It may be clearly understood by persons skilled in the art that, for the purpose of convenient and brief description, reference may be made to the corresponding process in the foregoing method embodiments for detailed working processes of the foregoing systems, apparatuses, and units, and details will not be described here again.

In several embodiments provided in the present application, it should be understood that the disclosed systems, apparatuses, and methods may be implemented in other manners. For example, the described apparatus embodiments are merely exemplary. For instance, the division of the units is merely a division of logical functions and there may be other divisions during actual implementations. For instance, multiple units or components may be combined or integrated into another system, or some features may be omitted or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on multiple network units. A part or all of the units may be selected according to actual needs to achieve the objectives of the scheme in the embodiments.

In addition, functional units in the embodiments of the present application may be integrated into one processing unit, or each of the units may exist alone physically, or two or more units are integrated into one unit.

If implemented in a form of a software functional unit and sold or used as an independent product, the functions may be stored in a computer readable storage medium. Based on such understanding, the technical solution of the present application essentially, or the part contributing to the prior art, or a part of the technical solution may be implemented in a form of a software product. The computer software product is stored in a storage medium, and includes several instructions for enabling a computer device (which may be a personal computer, a server, or a network device, etc.) to perform all or a part of the steps of the methods described in the embodiments of the present application. The foregoing storage medium includes: any medium that can store program codes, such as a USB flash disk, a mobile hard disk, a read-only memory (ROM, Read-Only Memory), a random access memory (Random Access Memory, RAM), a magnetic disk, or an optical disc, etc.

The above descriptions are merely specific embodiments of the present application; however, the protection scope of the present application is not limited thereto. Any modification or replacement that may be readily envisaged of by persons skilled in the art within the technical scope disclosed in the present application should fall into the protection scope of the present application. Thus, the protection scope of the present application shall be subject to the claims.

## Claims

1. A method for cell handover, comprising:
selecting, according to at least one piece of attribute information of each candidate target cell of at least one candidate target cell, a first target cell from the at least one candidate target cell, wherein the at least one piece of attribute information comprises at least one of the following categories: priority information, weight information, signal quality, an available resource, and admission capability; and
initiating random access to the first target cell to perform cell handover.

2. The method according to claim 1, wherein the admission capability comprises admission capability for a protocol data unit PDU session and/or admission capability for a quality of service QoS flow.

3. The method according to claim 2, wherein the admission capability is **characterized by** a number of admissible PDU sessions and/or a number of admissible QoS flows.

4. The method according to any one of claims 1 to 3, wherein the available resource comprises an available frequency domain resource and/or an available random access resource.

5. The method according to claim 4, wherein the available frequency domain resource comprises an available bandwidth part BWP resource and/or an available aggregated carrier resource.

6. The method according to claim 4 or 5, wherein the available random access resource comprises an available dedicated random access channel RACH resource.

7. The method according to claim 6, wherein the dedicated RACH resource comprises a dedicated RACH resource based on a channel state information reference signal CSI-RS and/or a synchronization signal block SSB.

8. The method according to any one of claims 1 to 7, further comprising:
receiving at least one of the following categories of the at least one candidate target cell transmitted by a network device: priority information, weight information, admission capability, and an available resource.

9. The method according to any one of claims 1 to 8, wherein the first target cell is a cell with highest priority of the at least one candidate target cell.

10. The method according to claim 9, wherein the first target cell is a cell with best signal quality of multiple candidate target cells with highest priority.

11. The method according to any one of claims 1 to 8, further comprising:
generating a random number;
wherein the selecting, according to the at least one piece of attribute information of each candidate target cell of the at least one candidate target cell, the first target cell from the at least one candidate target cell comprises:
selecting the first target cell according to the generated random number and a corresponding relationship between at least one random number and the at least one candidate target cell.

12. The method according to any one of claims 1 to 11, wherein the selecting, according to the at least one piece of attribute information of each candidate target cell of the at least one candidate target cell, the first target cell from the at least one candidate target cell comprises:
selecting, according to a preset determination sequence of the at least one piece of attribute information, the first target cell by sequentially determining the at least one piece of attribute information, wherein the sequentially determining the at least one piece of attribute information comprises selecting, according to a current piece of attribute information, among multiple candidate target cells which are selected from a previous piece of attribute information.

13. The method according to any one of claims 1 to 12, further comprising:
during a process of random access to the first target cell, if it is detected that a second target cell has a priority higher than a priority of the first target cell, initiating random access to the second target cell after current random access to the first target cell fails.

14. The method according to claim 13, wherein the second target cell is a cell with best signal quality of multiple candidate target cells with higher priority than the first target cell.

15. The method according to any one of claims 1 to 14, further comprising:
initiating random access to a third target cell under a circumstance that the random access to the first target cell reaches a maximum number of access times and/or a maximum access duration allowed by the first target cell and the access to the first target cell is still not successful.

16. The method according to claim 15, further comprising:
receiving the maximum number of access times and/or the maximum access duration allowed by the first target cell transmitted by a network device.

17. The method according to claim 15 or 16, wherein the initiating the random access to the first target cell comprises transmitting, to the first target cell, a first preamble for random access, and wherein the initiating the random access to the third target cell comprises transmitting, to the third target cell, a second preamble for random access, and power for transmitting the second preamble is determined according to power upon power ramping of power for transmitting the first preamble.

18. The method according to claim 17, wherein the power for transmitting the second preamble is equal to the power upon the power ramping of the power for transmitting the first preamble.

19. The method according to any one of claims 1 to 18, wherein the at least one candidate target cell is a cell that meets a handover triggering condition.

20. A method for cell handover, comprising:
initiating random access to a first target cell to perform cell handover; and
when the random access to the first target cell reaches a maximum number of access times and/or a maximum access duration allowed by the first target cell, initiating random access to a second target cell, wherein the second target cell is a cell used for handover.

21. The method according to claim 20, wherein the initiating the random access to the first target cell comprises transmitting, to the first target cell, a first preamble for random access, and wherein the initiating the random access to the second target cell comprises transmitting, to the second target cell, a second preamble for random access, and power for transmitting the second preamble is determined according to power upon power ramping of power for transmitting the first preamble.

22. The method according to claim 21, wherein the power for transmitting the second preamble is equal to the power upon the power ramping of the power for transmitting the first preamble.

23. A method for cell handover, comprising:
initiating random access to a first target cell to perform cell handover; and
after the random access to the first target cell fails, initiating random access to a second target cell, wherein the initiating the random access to the first target cell comprises transmitting, to the first target cell, a first preamble for random access, and wherein the initiating the random access to the second target cell comprises transmitting, to the second target cell, a second preamble for random access, and power for transmitting the second preamble is determined according to power upon power ramping of power for transmitting the first preamble.

24. The method according to claim 23, wherein the power for transmitting the second preamble is equal to the power upon the power ramping of the power for transmitting the first preamble.

25. A method for cell handover, comprising:
transmitting at least one piece of attribute information of each candidate target cell of at least one candidate target cell to a terminal device, wherein the at least one piece of attribute information comprises at least one of the following categories: priority information, weight information, signal quality, an available resource, and admission capability, and the at least one piece of attribute information is used by the terminal device to perform cell handover.

26. The method according to claim 25, wherein the admission capability comprises admission capability for a protocol data unit PDU session and/or admission capability for a quality of service QoS flow.

27. The method according to claim 26, wherein the admission capability is **characterized by** a number of admissible PDU sessions and/or a number of admissible QoS flows.

28. The method according to any one of claims 25 to 27, wherein the available resource comprises an available frequency domain resource and/or an available random access resource.

29. The method according to claim 28, wherein the available frequency domain resource comprises an available bandwidth part BWP resource and/or an available aggregated carrier resource.

30. The method according to claim 28 or 29, wherein the available random access resource comprises an available dedicated random access channel RACH resource.

31. The method according to claim 30, wherein the dedicated RACH resource comprises a dedicated RACH resource based on a channel state information reference signal CSI-RS and/or a synchronization signal block SSB.

32. The method according to any one of claims 25 to 31, further comprising:
transmitting, to the terminal device, a maximum number of access times and/or a maximum access duration allowed by each candidate target cell of the at least one candidate target cell.

33. The method according to any one of claims 25 to 32, further comprising:
transmitting a preset determination sequence of the at least one piece of attribute information to the terminal device, wherein the preset determination sequence is used by the terminal device to select a target cell.

34. The method according to any one of claims 25 to 33, wherein the at least one candidate target cell is a cell that meets a handover triggering condition.

35. A terminal device, comprising:
a processing unit, configured to select, according to at least one piece of attribute information of each candidate target cell of at least one candidate target cell, a first target cell from the at least one candidate target cell, wherein the at least one piece of attribute information comprises at least one of the following categories: priority information, weight information, signal quality, an available resource, and admission capability; and
a communication unit, configured to initiate random access to the first target cell to perform cell handover.

36. The terminal device according to claim 35, wherein the admission capability comprises admission capability for a protocol data unit PDU session and/or admission capability for a quality of service QoS flow.

37. The terminal device according to claim 36, wherein the admission capability is **characterized by** a number of admissible PDU sessions and/or a number of admissible QoS flows.

38. The terminal device according to any one of claims 35 to 37, wherein the available resource comprises an available frequency domain resource and/or an available random access resource.

39. The terminal device according to claim 38, wherein the available frequency domain resource comprises an available bandwidth part BWP resource and/or an available aggregated carrier resource.

40. The terminal device according to claim 38 or 39, wherein the available random access resource comprises an available dedicated random access channel RACH resource.

41. The terminal device according to claim 40, wherein the dedicated RACH resource comprises a dedicated RACH resource based on a channel state information reference signal CSI-RS and/or a synchronization signal block SSB.

42. The terminal device according to any one of claims 35 to 41, wherein the communication unit is further configured to:
receive at least one of the following categories of the at least one candidate target cell transmitted by a network device: priority information, weight information, admission capability, and an available resource.

43. The terminal device according to any one of claims 35 to 42, wherein the first target cell is a cell with highest priority of the at least one candidate target cell.

44. The terminal device according to claim 43, wherein the first target cell is a cell with best signal quality of multiple candidate target cells with highest priority.

45. The terminal device according to any one of claims 35 to 42, wherein the processing unit is further configured to:
generate a random number; and
select the first target cell according to the generated random number and a corresponding relationship between at least one random number and the at least one candidate target cell.

46. The terminal device according to any one of claims 35 to 45, wherein the processing unit is configured to:
select, according to a preset determination sequence of the at least one piece of attribute information, the first target cell by sequentially determining the at least one piece of attribute information, wherein the sequentially determining the at least one piece of attribute information comprises selecting, according to a current piece of attribute information, among multiple candidate target cells which are selected from a previous piece of attribute information.

47. The terminal device according to any one of claims 35 to 46, wherein the communication unit is configured to:
during a process of random access to the first target cell, if it is detected that a second target cell has a priority higher than a priority of the first target cell, initiate random access to the second target cell after current random access to the first target cell fails.

48. The terminal device according to claim 47, wherein the second target cell is a cell with best signal quality of multiple candidate target cells with higher priority than the first target cell.

49. The terminal device according to any one of claims 35 to 48, wherein the communication unit is configured to:
initiate random access to a third target cell under a circumstance that the random access to the first target cell reaches a maximum number of access times and/or a maximum access duration allowed by the first target cell and the access to the first target cell is still not successful.

50. The terminal device according to claim 49, wherein the communication unit is further configured to:
receive the maximum number of access times and/or the maximum access duration allowed by the first target cell transmitted by a network device.

51. The terminal device according to claim 49 or 50, wherein the initiating the random access to the first target cell comprises transmitting, to the first target cell, a first preamble for random access, and wherein the initiating the random access to the third target cell comprises transmitting, to the third target cell, a second preamble for random access, and power for transmitting the second preamble is determined according to power upon power ramping of power for transmitting the first preamble.

52. The terminal device according to claim 51, wherein the power for transmitting the second preamble is equal to the power upon the power ramping of the power for transmitting the first preamble.

53. The terminal device according to any one of claims 35 to 52, wherein the at least one candidate target cell is a cell that meets a handover triggering condition.

54. A terminal device, comprising:
a communication unit, configured to initiate random access to a first target cell to perform cell handover;
wherein the communication unit is further configured to: when the random access to the first target cell reaches a maximum number of access times and/or a maximum access duration allowed by the first target cell, initiate random access to a second target cell, wherein the second target cell is a cell used for handover.

55. The terminal device according to claim 54, wherein the initiating the random access to the first target cell comprises transmitting, to the first target cell, a first preamble for random access, and wherein the initiating the random access to the second target cell comprises transmitting, to the second target cell, a second preamble for random access, and power for transmitting the second preamble is determined according to power upon power ramping of power for transmitting the first preamble.

56. The terminal device according to claim 55, wherein the power for transmitting the second preamble is equal to the power upon the power ramping of the power for transmitting the first preamble.

57. A terminal device, comprising:
a communication unit, configured to initiate random access to a first target cell to perform cell handover;
wherein the communication unit is further configured to: after the random access to the first target cell fails, initiate random access to a second target cell, wherein the initiating the random access to the first target cell comprises transmitting, to the first target cell, a first preamble for random access, and wherein the initiating the random access to the second target cell comprises transmitting, to the second target cell, a second preamble for random access, and power for transmitting the second preamble is determined according to power upon power ramping of power for transmitting the first preamble.

58. The terminal device according to claim 57, wherein the power for transmitting the second preamble is equal to the power upon the power ramping of the power for transmitting the first preamble.

59. A network device, comprising:
a communication unit, configured to transmit at least one piece of attribute information of each candidate target cell of at least one candidate target cell to a terminal device, wherein the at least one piece of attribute information comprises at least one of the following categories: priority information, weight information, signal quality, an available resource, and admission capability, and the at least one piece of attribute information is used by the terminal device to perform cell handover.

60. The network device according to claim 59, wherein the admission capability comprises admission capability for a protocol data unit PDU session and/or admission capability for a quality of service QoS flow.

61. The network device according to claim 60, wherein the admission capability is **characterized by** a number of admissible PDU sessions and/or a number of admissible QoS flows.

62. The network device according to any one of claims 59 to 61, wherein the available resource comprises an available frequency domain resource and/or an available random access resource.

63. The network device according to claim 62, wherein the available frequency domain resource comprises an available bandwidth part BWP resource and/or an available aggregated carrier resource.

64. The network device according to claim 62 or 63, wherein the available random access resource comprises an available dedicated random access channel RACH resource.

65. The network device according to claim 64, wherein the dedicated RACH resource comprises a dedicated RACH resource based on a channel state information reference signal CSI-RS and/or a synchronization signal block SSB.

66. The network device according to any one of claims 59 to 65, wherein the communication unit is further configured to:
transmit, to the terminal device, a maximum number of access times and/or a maximum access duration allowed by each candidate target cell of the at least one candidate target cell.

67. The network device according to any one of claims 59 to 66, wherein the communication unit is further configured to:
transmit a preset determination sequence of the at least one piece of attribute information to the terminal device, wherein the preset determination sequence is used by the terminal device to select a target cell.

68. The network device according to any one of claims 59 to 67, wherein the at least one candidate target cell is a cell that meets a handover triggering condition.

69. A terminal device, comprising: a processor and a memory, wherein the memory is configured to store a computer program, and the processor is configured to call and run the computer program stored in the memory to execute the method according to any one of claims 1 to 19.

70. A terminal device, comprising: a processor and a memory, wherein the memory is configured to store a computer program, and the processor is configured to call and run the computer program stored in the memory to execute the method according to any one of claims 20 to 22.

71. A terminal device, comprising: a processor and a memory, wherein the memory is configured to store a computer program, and the processor is configured to call and run the computer program stored in the memory to execute the method according to any one of claims 23 to 24.

72. A network device, comprising: a processor and a memory, wherein the memory is configured to store a computer program, and the processor is configured to call and run the computer program stored in the memory to execute the method according to any one of claims 25 to 34.

73. A chip, comprising: a processor, configured to call and run a computer program from a memory to enable a device installed with the chip to execute the method according to any one of claims 1 to 19.

74. A chip, comprising: a processor, configured to call and run a computer program from a memory to enable a device installed with the chip to execute the method according to any one of claims 20 to 22.

75. A chip, comprising: a processor, configured to call and run a computer program from a memory to enable a device installed with the chip to execute the method according to any one of claims 23 to 24.

76. A chip, comprising: a processor, configured to call and run a computer program from a memory to enable a device installed with the chip to execute the method according to any one of claims 25 to 34.

77. A computer readable storage medium, configured to store a computer program that enables a computer to execute the method according to any one of claims 1 to 19.

78. A computer readable storage medium, configured to store a computer program that enables a computer to execute the method according to any one of claims 20 to 22.

79. A computer readable storage medium, configured to store a computer program that enables a computer to execute the method according to any one of claims 23 to 24.

80. A computer readable storage medium, configured to store a computer program that enables a computer to execute the method according to any one of claims 25 to 34.

81. A computer program product, comprising a computer program instruction that enables a computer to execute the method according to any one of claims 1 to 19.

82. A computer program product, comprising a computer program instruction that enables a computer to execute the method according to any one of claims 20 to 22.

83. A computer program product, comprising a computer program instruction that enables a computer to execute the method according to any one of claims 23 to 24.

84. A computer program product, comprising a computer program instruction that enables a computer to execute the method according to any one of claims 25 to 34.

85. A computer program enabling a computer to execute the method according to any one of claims 1 to 19.

86. A computer program enabling a computer to execute the method according to any one of claims 20 to 22.

87. A computer program enabling a computer to execute the method according to any one of claims 23 to 24.

88. A computer program enabling a computer to execute the method according to any one of claims 25 to 34.
